# EUROPÄISCHE PATENTSCHRIFT

(11) **EP 0 480 144 B1**
(45) Veröffentlichungstag und Bekanntmachung des Hinweises auf die Patenterteilung: **22.12.1993**
(21) Anmeldenummer: 91113734.7
(22) Anmeldetag: 16.08.1991
(51) Int. Cl.: F27D 23/02, B08B 1/04

(54) **Verfahren zur Wiederherstellung der Ebenflächigkeit der Beladefläche von Härtewagen sowie eine Vorrichtung zur Durchführung des Verfahrens**
Method for recovery the flatness of a hardened waggon's loading area and a device for the execution of this method
Procédé pour réparation de la planéité de la surface de chargement d'un wagon de dureté ainsi qu'un dispositif pour mettre en oeuvre ce procédé

(30) Priorität: 11.10.1990 DE 9014109 U
(43) Veröffentlichungstag der Anmeldung: 15.04.1992
(73) Patentinhaber: MBM MASCHINENBAU MÜHLDORF GMBH, D-84453 Mühldorf (DE)
(72) Erfinder: Ertz, Karl-Heinz, W-8260 Mühldorf (DE)
(74) Vertreter: Seidel, Herta, Dipl.-Phys.

(56) Entgegenhaltungen:
- DE-A- 3 407 394
- DE-A- 3 827 400
- DE-C- 3 331 332
- DE-U- 8 902 087

## Beschreibung

Die Erfindung betrifft ein Verfahren zur Wiederherstellung der Ebenflächigkeit der Beladefläche von Härtewagen, bei dem während der Arbeitsphase mindestens ein Messer auf die Beladefläche abgesenkt und über die gesamte Beladefläche verfahren wird.

Ferner betrifft die Erfindung eine Vorrichtung zur Durchführung des Verfahrens mit einem als Messerhalterung ausgebildeten Katzwagen, der längs Schienen verfahrbar ist, die die Beladefläche des Härtewagens überbrücken, wobei die Messerausrichtung quer zur Fahrtrichtung des Katzwagens gewählt ist.

Geformte Kalksandsteinrohlinge werden in Stapeln auf eine ebene Beladefläche aus Metall eines sogenannten Härtewagens gesetzt und mit diesem zur Aushärtung in einen rohrförmigen Härteofen gefahren. Die Beladefläche kann dabei entweder aus einer zusammenhängenden ebenen Fläche oder aus zwei oder mehreren Profilen mit ebener Oberfläche gebildet sein, die parallel zueinander in geringen Abständen voneinander in Längs- oder Querrichtung des Härtewagens verlaufen, wobei die Oberflächen der Profile etwa auf gleichem Niveau liegen.
Nach abgeschlossenem Härtevorgang werden die Kalksandsteine von dem Härtewagen heruntergenommen und bis zum Gebrauch gelagert. Beim Trockenvorgang gelangt Kalkmilch aus den Rohlingen auf die Beladefläche des Härtewagens und backt dort während des Trockenvorganges fest. Auch bleiben häufig Rückstände der im Stapel zuunterstliegenden Rohlinge beim Entfernen der ausgehärteten Steine auf dem Härtewagen zurück und haften in Form von Anbackungen, die aus einem verfestigten Kalk-Sandsteingemisch bestehen, auf der Oberfläche des Härtewagens fest. Die sich hieraus ergebende Unebenheit der Beladefläche ist aber von Bedeutung für die Vermeidung von Rissen der auf den Härtewagen gesetzten noch weichen Rohlinge. Die Beladefläche muß daher vor erneuter Beladung so von den Rückständen gereinigt und befreit werden, daß ihre Ebenflächigkeit wiederhergestellt ist, um sicherzugehen, daß die noch weichen Kalksandsteinrohlinge keine Beschädiung ihrer glatten Außenflächen erfahren.

Bisher hat man zu diesem Zweck die Beladeflächen der Härtewagen abgebürstet oder mit sogenannten Topfscheiben abgeschliffen. Man hat auch bereits Sandstrahlgebläse zum Abtragen der Rückstände auf der Beladefläche eingesetzt. Diese Maßnahmen haben jedoch alle den Nachteil, daß sie die Metalloberfläche der Beladefläche angreifen und die Ebenflächigkeit der Beladefläche zerstören, sowie die anhaftenden Rückstände auch nicht vollständig entfernen können.

Aus dem DE-U- 89 02 087 ist bereits eine Reinigungsvorrichtung bekannt geworden, bei der in einer Gerüstbrücke mit einem die Schienen des Härtewagens überspannenden Fahrwerksträger ein Fahrwerk geführt ist, in dem eine Tragvorrichtung für eine oder zwei Schaberplatten befestigt ist. Die Länge einer Schaberplatte entspricht der Länge der Transportfläche des Härtewagens. Im Reinigungsbetrieb werden die Schaberplatten auf die Beladefläche des Härtewagens aufgelegt, anschließend wird das Fahrwerk nach rechts oder links verfahren, wobei je nach Fahrtrichtung die eine oder die andere Schaberplatte die auf der Beladefläche angebackenen Verunreinigungen abschaben.

Es hat sich aber gezeigt, daß der bei der kontinuierlichen Messerbewegung erzielte einfache Schrappvorgang keine zufriedenstellende Reinigung der Beladefläche ergibt. Bei dem Schrappvorgang reißt nämlich das mit großer Kraft über die Oberfläche geführte Messer die gesamten Materialanbackungen, die aus einem verfestigten Kalksandgemisch bestehen und sich unter Umständen auch in Vertiefungen der Beladefläche befinden, mit sich fort, wobei auch die in die Vertiefungen eingebrachten und dort festgebackenen Materialmengen mit fortgerissen werden können. Mit anderen Worten,bei dieser Art der Beseitigung der auf der Beladefläche des Härtewagens anhaftenden Rückstände wird nicht nur keine Ebenflächigkeit der Beladefläche erreicht, sondern unter Umständen auch noch die Metalloberfläche des Härtewagens beschädigt, so daß letztlich Vertiefungen in der gereinigten Metalloberfläche vorliegen, die für die Herstellung der nachfolgenden Kalksandsteinrohlinge nachteilige Auswirkungen haben. Würde man aber die Messer nur mit leichtem Federdruck auf die Beladefläche auflegen, so könnte man die angebackenen Materialreste nicht vollständig entfernen.

Aufgabe der Erfindung ist es daher, ein Verfahren und eine Vorrichtung anzugeben, die es ermöglichen, die Beladefläche eines Härtewagens ohne Beschädigung seiner Oberfläche zu reinigen und dabei die Ebenflächigkeit der Oberfläche zu erhalten bzw. wiederherzustellen.

Erfindungsgemäß wird dies bei einem Verfahren der eingangs genannten Art dadurch erreicht, daß der Translationsbewegung des oder der Messer eine quer zu dieser gerichtete, sich wiederholende Hin- und Herbewegung überlagert wird.

Durch die erfindungsgemäße Arbeitsweise wird durch die den Messern vermittelte Bewegung, bei der sich diese quer zu ihrer Längsrichtung in einer Achsrichtung des Härtewagens über diesen bewegen, während sie gleichzeitig eine in Richtung ihrer Längsrichtung, das heißt, in Richtung der Messerschneide verlaufende Oszillation ausführen, die Voraussetzung dafür geschaffen, daß die Verunreinigungen der Oberfläche der Ladefläche entfernt werden, ohne daß aber die Oberfläche selbst angegriffen und beschädigt wird.

Bei einer oszillierenden Messerbewegung beim Überfahren des Härtewagens, wie dies bei dem erfindungsgemäßen Verfahren der Fall ist, treten die bisher bei dem herkömmlichen Vorgehen in Kauf genommenen Nachteile einer Beschädigung der Beladefläche nicht auf.

Infolge der oszillierenden Messerbewegung greifen die Messerkanten die Materialanbackungen von verschiedenen Richtungen aus an. Die hierbei wirksam werdende Kraft ist relativ gering im Vergleich zu dem bekannten Vorgehen mit einer Messerbewegung in gleichbleibender Richtung. Es handelt sich somit hier um einen sogenannten Schabevorgang, bei dem die Verkrustungen der Beladefläche nicht aus der Oberfläche herausgerissen werden, sondern die Oberfläche lediglich geglättet wird. Es bleibt daher die Ebenflächigkeit der Beladefläche erhalten, bzw. sie wird bei dem Arbeitsvorgang wiederhergestellt.

Während der Kraftaufwand bei einem Schrappvorgang, also dem Reinigungsvorgang, bei dem das oder die Messer kontinuierlich in einer Bewegungsrichtung geführt werden, relativ hoch ist, wird die Kraft bei einer oszillierenden Messerbewegung dagegen immer nur über eine geringe Strecke, nämlich eine Strecke, die der Amplitude der Hin- und Herbewegung entspricht, wirksam und fährt bei jeder Schwingung wieder erneut bei dem Wert Null an. Darüber hinaus ist durch die ständige Veränderung der Kraftrichtung, mit der die Messerschneide die Anbackungen angreift, sichergestellt, daß keine in Vertiefungen der Beladefläche eingedrungenen und dort verfestigten Materialreste beim Schabevorgang herausgerissen werden und erneut Unebenheiten der Beladefläche entstehen.

Eine zur Durchführung des Verfahrens nach der Erfindung geeignete Vorrichtung mit einem als Messerhalterung ausgebildeten Katzwagen, der längs Schienen verfahrbar ist, die die Beladefläche des Härtewagens überbrücken, wobei die Messerausrichtung quer zur Fahrtrichtung des Katzwagens gewählt ist, ist dadurch gekennzeichnet, daß ein oder mehrere Messer vorgesehen sind, die in dem Katzwagen hin- und herbewegbar angeordnet sind und ferner dadurch gekennzeichnet, daß in dem Katzwagen eine Betätigungsvorrichtung vorgesehen ist, die an das oder die Messer eine quer zur Fahrtrichtung des Katzwagens verlaufende Hin- und Herbewegung überträgt, die der Translationsbewegung des Katzwagens überlagert ist.

Es hat sich als vorteilhaft erwiesen, die zur Reinigung verwendeten Messer quer zur Längsachse der Beladefläche des Härtewagens über den Härtewagen zu bewegen. Vorzugsweise ist daher der Katzwagen als eine den Härtewagen in Längsrichtung überspannende Traverse ausgebildet, die mit beidseitig angeordneten Schlitten in Querrichtung des Härtewagens verlaufenden Führungsschienen verfahrbar ist, wobei die Schneidkanten des oder der Messer in Richtung der Längskante des Härtewagens ausgerichtet sind und ihre Länge etwa der Länge der Beladefläche des Härtewagens entspricht.

Ferner hat es sich als vorteilhaft erwiesen, daß zwei Messer in einem wählbaren Abstand parallel zueinander und zum Verlauf der Längsachse der Traverse angeordnet sind. Dabei wird vorzugsweise die Schneidkante des in Arbeitsrichtung gesehenen nachfolgenden Messers gleich oder etwas tiefer eingestellt, als die des vorangehenden Messers. Hierdurch wird eine besonders gute Ebenflächigkeit der Beladefläche erreicht, da der durch das vordere Messer, das sogenannte Grob- oder Schrappmesser bewirkte Reinigungseffekt durch eine saubere Nacharbeitung des zweiten Messers, des sogenannten Schlicht- oder Feinmessers verbessert. Gemäß einer weiteren vorzugsweisen Ausbildung der erfindungsgemäßen Vorrichtung ist die Messerschneide sägezahnförmig ausgebildet. Damit kann das Messer auch bei besonders hartnäckigen Verhärtungen der Oberfläche erfolgreich eingesetzt werden.

In der Technik werden auch Härtewagen eingesetzt, deren Beladefläche unterteilt ist. Die Beladefläche besteht bei diesen Härtewagen in der Regel aus vier parallel in einem geringen Abstand voneinander angeordneten ebenen Flächen, die in der Regel durch Profile gebildet sind. Um unvermeidliche Höhenunterschiede zwischen den einzelnen Oberflächen der Profile beim Reinigungsvorgang berücksichtigen zu können, werden vorzugsweise die Reinigungsmesser in Messerabschnitte unterteilt, deren Halterung über Druckfedern mit dem allen Messerabschnitten gemeinsamen Messerbalken verbunden sind. Hierdurch können sich die kleineren Messerabschnitte, bedingt durch die zwischen den gemeinsamen Messerbalken und ihrer Halterung vorgesehenen Druckfedern,individuell auf die Niveauflächen der einzelnen Profile der Beladefläche einstellen, die dann von den Messern in Richtung deren Längsachse überstrichen werden.

Weitere bevorzugte Ausbildungen und Einzelheiten der erfindungsgemäßen Vorrichtung ergeben sich aus den Ansprüchen und der nachstehenden Beschreibung eines Ausführungsbeispieles anhand der Zeichnung.

Hierin zeigen:
- Fig. 1: eine Seitenansicht der Vorrichtung zur Wiederherstellung der Ebenflächigkeit der Beladefläche eines Härtewagens mit ausgezogenen Strichen in ihrer Lage vor Beginn der Arbeitsphase und in gestrichelten Linien nach erfolgter Reinigung der Beladefläche des Härtewagen.
- Fig. 2: eine Ansicht der Traverse mit der Antriebsvorrichtung für die Messer,
- Fig.3a: Position der Traverse relativ zur Führungsschiene vor Beginn der Arbeitsphase,
- Fig.3b: Position der Traverse relativ zur Führungsschiene unmittelbar nach Beginn der Arbeitsphase,
- Fig.4: einen Führungsschlitten der Traverse in der Führungsschiene mit Federvorrichtung,
- Fig. 5: einen Querschnitt durch den Messerbalken,
- Fig. 6: die Ausrichtung der Schneidkanten der Messer,
- Fig. 7: einen Querschnitt durch einen Härtewagen, dessen Beladefläche durch einzelne Profilflächen gebildet ist, mit einer Reinigungsvorrichtung, die aus zwei voneinander getrennten Messerabschnitten besteht,
- Fig. 8: ein Diagramm der Messerbewegung während der Arbeitsphase und
- Fig. 9: ein Diagramm der wellenförmigen Bewegung der Messer.

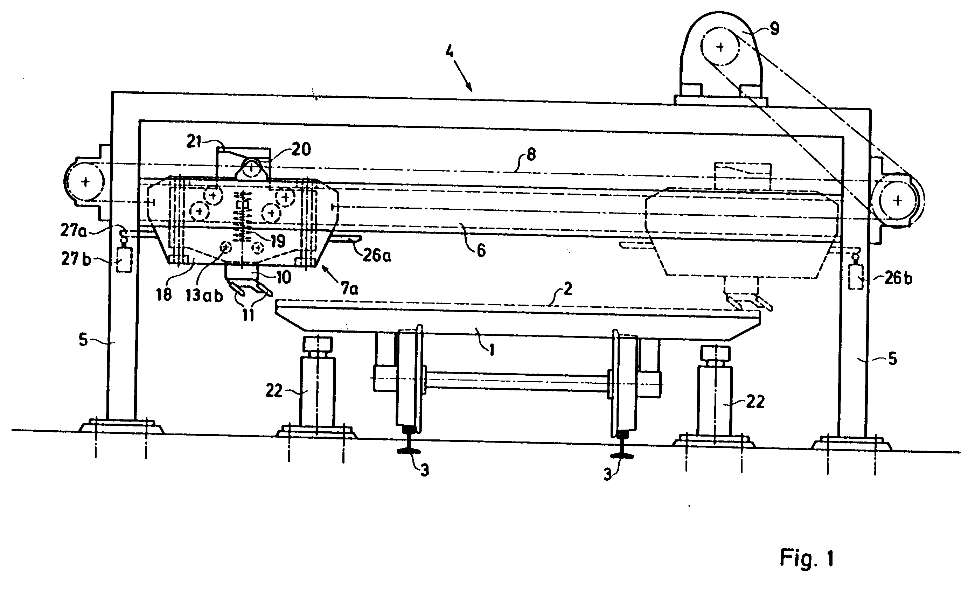

In Fig. 1 ist ein Härtewagen 1 gezeigt, der mit seiner Beladefläche 2 auf Schienen 3 unter eine Vorrichtung 4 zur Wiederherstellung der Ebenflächigkeit seiner Beladefläche 2 gefahren wurde.

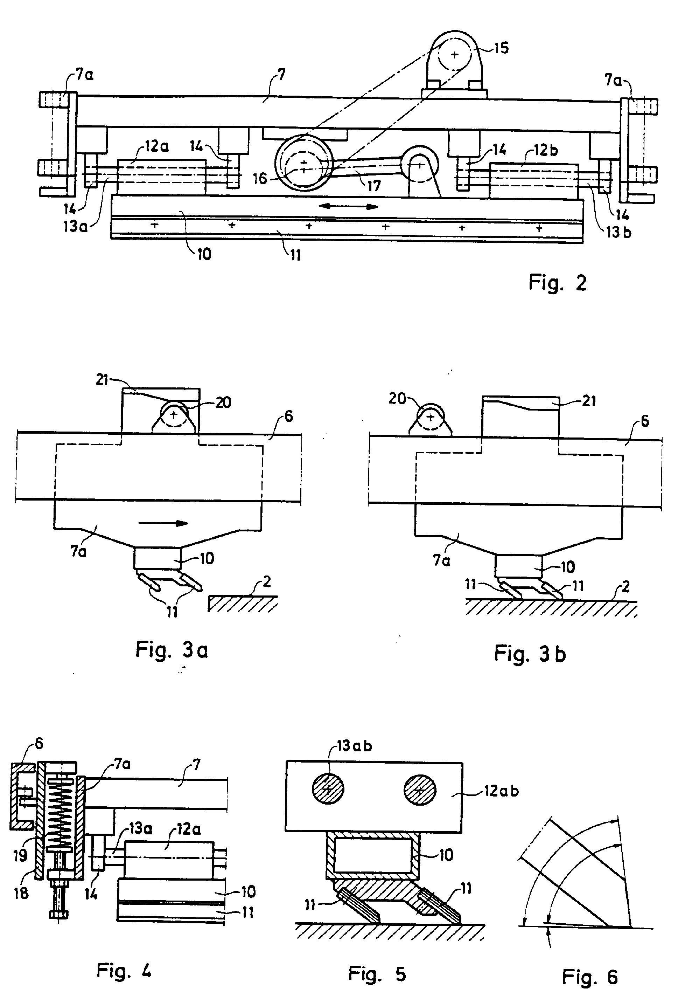

Die Vorrichtung 4 zur Wiederherstellung der Ebenflächigkeit der Beladefläche 2 umfaßt parallel zueinander, quer über den Härtewagen 1 verlaufende, in einem Rahmengestell 5 gehaltene Führungsschienen 6, für die beidseitig an einer Traverse 7 angeordneten Schlitten 7a. Mittels eines Kettenantriebes 8, der durch einen umschaltbaren Elektromotor 9 betätigt wird, ist die Traverse 7 längs der Führungsschienen 6 über die gesamte Breite des Härtewagens hin- und herverschiebbar.
Die Traverse 7 trägt einen Messerbalken 10, in den zwei parallele, in einem Abstand voneinander angeordnete Messer 11 mit in Längsrichtung der Traverse 7 verlaufenden Schneidkanten eingesetzt sind. Wie aus den Fig. 5 und 6 ersichtlich, sind die Schneidkanten der Messer 11 in einem Winkel von 80° gegen die Waagerechte eingesetzt. Zur Vermeidung einer Messerbeschädigung ist dabei ein Freiwinkel von ca. 2° gegen die Waagerechte vorgesehen.
Der Messerbalken 10 ist mit vier paarweise angeordneten Büchsen verbunden, die zur Halterung des Messerbalkens 10 in der Traverse 7 auf je zwei Achsen 13a, bzw. 13b geschoben sind, die ihrerseits von Lagerböcken 14 gehalten sind, die in der Traverse 7 nach unten ragen. Ein Elektromotor 15, befestigt auf der Traverse 7, betätigt über einen Exzenter 16 eine mit dem Messerbalken 10 verbundene Kurbelstange 17 und bewirkt eine Hin- und Herbewegung des Messerbalkens 10 relativ zu der Traverse 7 in deren Längsrichtung.

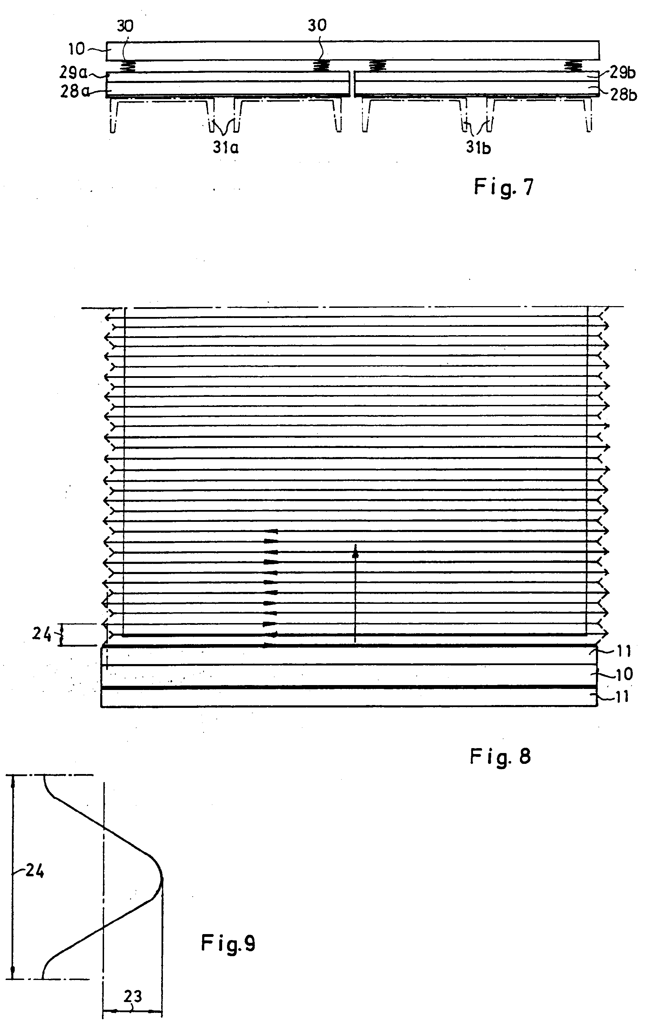

In den beiden Seitenwangen 18 der Traverse 7 ist jeweils eine Druckfeder 19 untergebracht, deren Aufgabe es ist, den Anpressdruck des Messerbalkens 10 auf die Beladefläche 2 des Härtewagens 1 zu regulieren, sobald die Traverse 7 abgesenkt wurde. Siehe hierzu Fig.4.
Zum Absenken der Traverse 7 um eine vorbestimmte Strecke tragen die Führungsschienen 6 an ihrem in der Zeichnung linken Kopfende zwei zur oberen Innenfläche der Traverse 7 hin ragende Leerlaufrollen 20. Die Leerlaufrollen 20 fahren, sobald die Traverse längs der Führungsschienen 6 in der Zeichnung nach rechts verschoben wird, über eine etwa keilförmige, an der Unterseite der oberen Innenfläche der Traverse befindliche Auflaufschiene 21.Die Keilstärke dieser Auflaufschiene 21 nimmt zum linken kopfseitigen Ende der Traverse 7 ab. Hierdurch wird erreicht, daß bei einer Verschiebebewegung der Traverse 7 nach rechts die Traverse 7 zusammen mit dem von ihr getragenen Messerbalken 10 um eine Strecke, die der Keilstärke der Auflaufschiene 21 entspricht, abgesenkt wird. Beim Zurückfahren der Traverse 7 in ihre Ausgangstellung, das ist in der Zeichnung zum linken Ende der Führungsschiene 6, fährt die keilförmige Auflaufschiene 21 erneut über die Leerlaufrollen 20 und hebt die Traverse 7 wieder an. Die Schneidkanten der Messer 11 werden dann mit dem Messerbalken 10 von der Beladefläche 2 des Härtewagens 1 ebenfalls abgehoben. Die Funktionsweise der keilförmigen Auflaufschienen 21 ist aus den Fig. 3a bzw. 3b ersichtlich.
In der Praxis werden neben Härtewagen mit durchgehend ebener Beladefläche auch Härtewagen mit unterbrochener Beladefläche eingesetzt. Hier ist die Beladefläche in parallel zueinander verlaufende ebene Flächen unterteilt, die in geringen Abständen voneinander so angeordnet sind, daß ihre Längsausrichtung in Richtung der Querachse der Härtewagen verläuft. Diese ebenen Flächenstreifen sind durch Profile 31a, 31b gebildet, wie aus Fig. 7 zu erkennen ist.

Die ebenen Oberflächen der Profile 31a,b liegen etwa auf gleichem Niveau, doch zeigt es sich in der Praxis, daß sich geringe Niveau unterschiede nicht immer vollständig vermeiden lassen. Damit aber die Schneidkanten der Messer 11 über ihre gesamte Länge gleichmäßig auf allen Oberflächen der Profile 31a,b aufliegen und damit eine gleichmäßige Reinigung und Wiederherstellung der Ebenflächigkeit der gesamten Beladefläche gewährleisten, hat man, wie dies ebenfalls aus Fig. 7 ersichtlich ist, die Messer 11, im Beispiel in zwei Messerabschnitte 28a und 28 b unterteilt, deren Schneidkanten miteinander fluchten. Die Messerabschnitte 28a und 28 b sind in voneinander getrennten Messerhaltern 29a bzw. 29b befestigt, die ihrerseits über je zwei Druckfederpaare 30 in dem gemeinsamen Messerbalken 10 gehalten sind.

Wird die Traverse 7 bei Beginn der Arbeitsphase auf die Beladefläche des Härtewagens 1 abgesenkt und der Anpreßdruck der Schneidkanten der Messer mit Hilfe der Druckfeder 19 eingestellt, so bleibt durch die Unterteilung der Messer 11 in die Messerabschnitte 28a,b mit Hilfe des Druckfederpaares 30 die Möglichkeit einer individuellen Anpassung der Schneidkanten der Messerabschnitte 28a,b an das Niveau der einzelnen Proifilflächen der Profile 31a,b.

Nachstehend wird die Arbeitsweise der Vorrichtung zur Wiederherstellung der Ebenflächigkeit der Beladefläche von Härtewagen erläutert:

Der Härtewagen 1 wird, nachdem die in einem Tunnelofen gehärteten, aus Kalksandstein bestehenden Formsteine von seiner Beladefläche entnommen wurden, zur Beseitigung der anhaftenden, beim Härtevorgang an der Beladefläche 2 angebackenen Kalksandsteinrückstände auf den Gleisen 3 unter die erfindungsgemäße Vorrichtung 4 gefahren. Die Traverse 7 befindet sich in der in Fig. 1 mit ausgezogenen Strichen gezeichneten Stellung, bei der die Schneiden der Meser 11 außerhalb und oberhalb der Beladefläche 2 liegen, da in dieser Lage die Traverse 7 durch das Zusammenwirken von Leerlaufrolle 20 und keilförmiger Auflaufschiene 21 angehoben ist.

Vor Beginn des Reinigungsprozesses wird der Härtewagen 1 mit Hilfe einer Hebevorrichtung 22 um ca. 25 mm aus dem Gleis 3 in die gestrichelt gezeichnete Stellung angehoben und dort arretiert. Die Elektromotoren 9 und 15 werden eingeschaltet, und zwar Motor 9 in Linkslauf und Motor 15 in Rechtslauf. Die Traverse 7 fährt entlang der Auflaufschiene 21 und senkt sich hierbei kontinuierlich ab, bis die Schneidkante des ersten Messers 11 auf der Beladefläche 2 aufliegt. Der Anpreßdruck der Schneidkante wird durch die Druckfeder 19 geregelt. Durch Betätigung des Motors 15 beginnt gleichzeitig die Hin- und Herbewegung der Buchsen 12a und 12 b auf den Achsen 13 a bzw. 13b der Traverse 7. Das heißt mit anderen Worten, der Schabevorgang beginnt und beide Messer 11 - auch das zweite Messer 11 ist durch das Verschieben der Traverse 7 inzwischen in Kontakt mit der Beladefläche 2 des Härtewagens 1 gelangt - führen infolge der Überlagerung ihrer Hin- und Herbewegung mit der translatorischen Verschiebebewegung der Traverse 7 eine Wellenbewegung aus, die aus Fig.8 ersichtlich ist.

Im Ausführungsbeispiel wurden für die Hin- und Herbewegung eine Amplitude 23 von 15 mm bei einer Wellenlänge 24 von 52 mm gewählt, während die Verschiebegeschwindigkeit der Traverse 7 längs der Führungsschienen 6 etwa 170 mm/sec. beträgt. Siehe hierzu Fig. 8 und 9.

Sobald der Schlitten 7a mit der Traverse 7 am rechtsseitigen Ende der Beladefläche 2 angelangt ist, in Fig. 1 gestrichelt eingezeichnete Stellung der Traverse, wird durch einen Kontaktfühler 26a der an der Traverse 7 angeordnet ist, ein Schalter 26 b betätigt, der die beiden Motore 9 und 15 abschaltet. Die Hebevorrichtung 22 senkt den Härtewagen 1 wieder auf die Gleise 3 ab. Sodann wird der Motor 9 in Rechtslauf eingeschaltet und der Schlitten fährt mit der Traverse 7 in die Anfangslage zurück, ohne daß die Messer 11 die Beladefläche 2 des Härtewagens 1 berühren, da dieser sich in abgesenkter Position befindet. Durch einen zweiten Fühler 27a, der ebenfalls an der Traverse 7 vorgesehen ist, wird über einen ' Schalter 27b im Bereich der Ausgangslage der Traverse 7 auch der Motor 9 abgeschaltet. Der Reinigungsvorgang ist beendet.

## Patentansprüche

1. Verfahren zur Wiederherstellung der Ebenflächigkeit der Beladefläche von Härtewagen (1), bei dem während der Arbeitsphase mindestens ein Messer (11) auf die Beladefläche (2) abgesenkt und über die gesamte Beladefläche verfahren wird, **dadurch gekennzeichnet,** daß der Translationsbewegung des oder der Messer (11) eine quer zu dieser gerichtete, sich wiederholende Hin- und Herbewegung überlagert wird.

2. Verfahren nach Anspruch 1, **dadurch gekennzeichnet,** daß die Translationsgeschwindigkeit des oder der Messer zwischen 100 und 300 mm/sec. beträgt.

3. Verfahren nach Anspruch 1 oder 2, **dadurch gekennzeichnet,** daß die Translationsgeschwindigkeit 170 mm/sec. beträgt.

4. Verfahren nach einem der vorhergehenden Ansprüche, **dadurch** **gekennzeichnet**, daß die Frequenz der der Translationsgeschwindigkeit überlagerten Hin- und Herbewegung zwischen 1 und 5 Hz liegt.

5. Verfahren nach einem der vorhergehenden Ansprüche, **dadurch** **gekennzeichnet**, daß die Frequenz der Hin- und Herbewegung 3 Hz beträgt.

6. Verfahren nach einem der vorhergehenden Ansprüche, **dadurch** **gekennzeichnet**, daß die Frequenz der Hin- und Herbewegung stufenlos verändert wird.

7. Verfahren nach einem der vorhergehenden Ansprüche, **dadurch** **gekennzeichnet**, daß nach Beendigung der Arbeitsphase das oder die Messer (11) von der Beladefläche (2) abgehoben und in ihre Ausgangslage zurückgefahren werden.

8. Verfahren nach einem der vorhergehenden Ansprüche, **dadurch** **gekennzeichnet**, daß das oder die Messer (11) in der Arbeitsphase an die Beladefläche (2) angedrückt werden.

9. Vorrichtung zur Durchführung des Verfahrens nach einem der Ansprüche 1 bis 8 mit einem als Messerhalterung ausgebildeten Katzwagen (7) der längs Schienen (6) Verfahrbar ist, die die Beladefläche (2) des Härtewagens (1) überbrücken, wobei die Messerausrichtung quer zur Fahrtrichtung des Katzwagens gewählt ist, **dadurch gekennzeichnet,** daß ein oder mehrere Messer (11) vorgesehen sind, die in dem Katzwagen (7) hin- und herbewegbar angeordnet sind und daß in dem Katzwagen (7) eine Betätigungsvorrichtung (15,16,17) vorgesehen ist, die an das oder die Messer(11)eine quer zur Fahrtrichtung des Katzwagens verlaufende Hin- und Herbewegung überträgt, die der Translationsbewegung des Katzwagens überlagert ist.

10. Vorrichtung nach Anspruch 9, **dadurch gekennzeichnet,** daß der Katzwagen als eine den Härtewagen (1) in Längsrichtung überspannende Traverse (7) ausgebildet ist, die mit beidseitig angeordneten Schlitten (7a) in in Querrichtung des Härtewagens verlaufenden Führungsschienen(6) verfahrbar ist.

11. Vorrichtung nach Anspruch 9 oder 10, **dadurch gekennzeichnet,** daß die Schneidkanten des oder der Messer (11) in Richtung der Längskante des Härtewagens (1) ausgerichtet sind und ihre Länge etwa der Länge der Beladefläche (2) des Härtewagens (2) entspricht.

12. Vorrichtung nach einem der Ansprüche 9 bis 11, **dadurch** **gekennzeichnet**, daß zwei Messer (11) in einem wählbaren Abstand parallel zueinander und zum Verlauf der Längsachse der Traverse (7) angeordnet sind.

13. Vorrichtung nach einem der Ansprüche 9 bis 12, **dadurch gekennzeichnet,** daß die Traverse (7) mit Hilfe eines Kettenantriebes (8), der über einen ersten umschaltbaren Antriebsmotor (9) betätigbar ist, verfahrbar ist.

14. Vorrichtung nach einem der Ansprüche 9 bis 13, **dadurch** **gekennzeichnet**, daß die Betätigungsvorrichtung als ein Exzenter (16) ausgebildet ist,der drehbar durch einen zweiten fest auf der Taverse (7) angeordneten Antriebsmotor (15) über eine mit dem Exzenter (16) gekoppelte Kurbelstange (17) mit den in der Traverse beweglich gehalterten Messern (11) verbunden ist.

15. Vorrichtung nach einem der Ansprüche 9 bis 14, **dadurch** **gekennzeichnet**, daß zum Anheben und Absenken der Messer (11) auf die Beladefläche (2) des Härtewagens (1) an der den Führungsschienen (6) zugewandten Oberfläche der Traverse (7) in einem Abstand voneinander zwei sich etwa keilförmig verdickende Auflaufschienen (21) so angeordnet sind, daß beim Zurückfahren der Traverse (7) in ihre Ausgangsposition die Auflaufschienen(21) über am kopfseitigen Ende der Führungsschiene (6) vorgesehene Leerlaufrollen (20) gleiten und die Traverse entsprechend der Keilform der Auflaufschienen (21) anheben und bei Beginn der Arbeitsphase, das heißt bei Fahrtrichtung der Traverse über den Härtewagen, die Traverse (7) soweit absenken, bis die Schneidkante der Messer (11) auf der Beladefläche aufliegen.

16. Vorrichtung nach einem der Ansprüche 9 bis 15, **dadurch** **gekennzeichnet**, daß der Anpreßdruck der Messer (11) an die Beladefläche (2) bei abgesenkter Traverse durch Federvorrichtungen (19) justierbar ist.

17. Vorrichtung nach einem der Ansprüche 9 bis 16, **dadurch** **gekennzeichnet**, daß die Messer (11) in einem Messerbalken (10) in Abständen voneinander,mit parallell zur Traverse (7) verlaufenden Schneidkanten befestigt sind, wobei der Messerbalken (10) seinerseits in Richtung der Längsachse der Traverse (7) hin- und herverschiebbar angeordnet ist.

18. Vorrichtung nach einem der Ansprüche 9 bis 17, **dadurch** **gekennzeichnet**, daß die Messer (11) in Messerabschnitte(28a,b)unterteilt sind, die miteinander fluchten.

19. Vorrichtung nach einem der Ansprüche 9 bis 18, **dadurch** **gekennzeichnet**, daß die Messerabschnitte (28 a,b,) eines Messers (11) von Messerhaltern (29a,b) getragen sind, die über Druckfedern (30) mit dem den Messerabschnitten (28a,b,) gemeinsamen Messerbalken (10) verbunden sind.

20. Vorrichtung nach einem der Ansprüche 9 bis 19, **dadurch** **gekennzeichnet**, daß die Messer (11) jeweils in zwei Messerabschnitte (28 a,b) unterteilt sind, wobei die Länge jedes Messerabschnittes (28,a,b) der Breite von zwei Profilen (31a,b,) der Beladefläche des Härtewagens entspricht.

21. Vorrichtung nach einem der Ansprüche 9 bis 20, **dadurch** **gekennzeichnet**, daß die Schneidkanten des oder der Messer in einem Winkel zur Beladefläche (2) verlaufen, der in einem Bereich zwischen 60 und 90° von der Beladefläche aus gesehen liegt und vorzugsweise 80° beträgt.

22. Vorrichtung nach einem der Ansprüche 9 bis 21, **dadurch** **gekennzeichnet**, daß die Schneidkante der Messer (11) glatt ist.

23. Vorrichtung nach einem der Ansprüche 9 bis 21, **dadurch** **gekennzeichnet**, daß die Schneidkante der Messer sägezahnförmig ausgebildet ist.

24. Vorrichtung nach einem der Ansprüche9 bis 23, **dadurch** **gekennzeichnet**, daß bei zwei parallel zueinander in einem gemeinsamen Messerbalken (10) befestigten Messern (11) die Schneidkante des in Arbeitsrichtung gesehen nachfolgenden Messers gleich oder etwas tiefer eingestellt ist, als die des voranstehenden Messers.

## Claims

1. Method of restoring the flatness of the loading surface of hardening trolleys (1), wherein during the working phase at least one cutter (11) is lowered onto the loading surface (2) and moved over the entire loading surface, characterized in that there is superimposed on the translational motion of the cutter or cutters (11) a recurring reciprocating motion directed at right angles thereto.

2. Method according to claim 1, characterized in that the translational velocity of the cutter or cutters is between 100 and 300 mm/sec.

3. Method according to claim 1 or 2, characterized in that the translational velocity is 170 mm/sec.

4. Method according to one of the preceding claims, characterized in that the frequency of the reciprocating motion superimposed on the translational velocity is between 1 and 5 Hz.

5. Method according to one of the preceding claims, characterized in that the frequency of the reciprocating motion is 3 Hz.

6. Method according to one of the preceding claims, characterized in that the frequency of the reciprocating motion is infinitely varied.

7. Method according to one of the preceding claims, characterized in that, on completion of the working phase, the cutter or cutters (11) is/are raised from the loading surface (2) and returned into its/their starting position.

8. Method according to one of the preceding claims, characterized in that the cutter or cutters (11) during the working phase is/are pressed against the loading surface (2).

9. Device for effecting the method according to one of claims 1 to 8, having a trolley carriage (7) designed as a cutter-holding device, which is displaceable along rails (6) spanning the loading surface (2) of the hardening trolley (1), the cutter alignment being selected at right angles to the direction of travel of the trolley carriage, characterized in that one or more cutters (11) are provided, which are disposed in the trolley carriage (7) so as to be capable of reciprocating motion, and that there is provided in the trolley carriage (7) an actuating device (15, 16, 17) which transmits to the cutter or cutters (11) a reciprocating motion extending at right angles to the direction of travel of the trolley carriage, said reciprocating motion being superimposed on the translational motion of the trolley carriage.

10. Device according to claim 9, characterized in that the trolley carriage takes the form of a traverse (7) which spans the hardening trolley (1) in a longitudinal direction and, by means of slides (7a) disposed at either end, is displaceable in guide rails (6) extending in a transverse direction of the hardening trolley.

11. Device according to claim 9 or 10, characterized in that the cutting edges of the cutter or cutters (11) are aligned in the direction of the longitudinal edge of the hardening trolley (1) and their length corresponds approximately to the length of the loading surface (2) of the hardening trolley (2).

12. Device according to one of claims 9 to 11, characterized in that two cutters (11) are disposed a selectable distance apart parallel to one another and to the course of the longitudinal axis of the traverse (7).

13. Device according to one of claims 9 to 12, characterized in that the traverse (7) is displaceable with the aid of a chain drive (8) which is operable via a first reversible drive motor (9).

14. Device according to one of claims 9 to 13, characterized in that the actuating device takes the form of an eccentric (16) which is connected, so as to be rotatable by a second drive motor (15) rigidly disposed on the traverse (7), via a connecting rod (17), which is coupled to the eccentric (16), to the cutters (11) movably supported in the traverse.

15. Device according to one of claims 9 to 14, characterized in that, to raise and lower the cutters (11) onto the loading surface (2) of the hardening trolley (1), two spaced-apart run-up rails (21) which thicken in an approximately wedge-shaped manner are disposed on the surface of the traverse (7) facing the guide rails (6) in such a way that, when the traverse (7) returns into its starting position, the run-up rails (21) slide over idler pulleys (20), which are provided at the head end of the guide rail (6), and raise the traverse in accordance with the wedge shape of the run-up rails (21) and, at the start of the working phase, i.e. in the case of the direction of travel of the traverse over the hardening trolley, lower the traverse (7) until the cutting edge of the cutters (11) rests on the loading surface.

16. Device according to one of claims 9 to 15, characterized in that, once the traverse has been lowered, the contact pressure of the cutters (11) upon the loading surface (2) is adjustable by means of spring devices (19).

17. Device according to one of claims 9 to 16, characterized in that the cutters (11) are fastened in a cutter bar (10) spaced apart from one another and with their cutting edges extending parallel to the traverse (7), the cutter bar (10) in turn being disposed so as to be displaceable to and fro in the direction of the longitudinal axis of the traverse (7).

18. Device according to one of claims 9 to 17, characterized in that the cutters (11) are subdivided into cutter portions (28a, b) which are flush with one another.

19. Device according to one of claims 9 to 18, characterized in that the cutter portions (28a, b) of a cutter (11) are carried by cutter holders (29a, b) which are connected via pressure springs (30) to the cutter bar (10) common to the cutter portions (28a, b).

20. Device according to one of claims 9 to 19, characterized in that the cutters (11) are each subdivided into two cutter portions (28a, b), the length of each cutter portion (28a, b) corresponding to the width of two profiles (31a, b) of the loading surface of the hardening trolley.

21. Device according to one of claims 9 to 20, characterized in that the cutting edges of the cutter or cutters extend at an angle to the loading surface (2) which, viewed from the loading surface, lies in a range between 60 and 90° and is preferably 80°.

22. Device according to one of claims 9 to 21, characterized in that the cutting edge of the cutters (11) is smooth.

23. Device according to one of claims 9 to 21, characterized in that the cutting edge of the cutters is serrated.

24. Device according to one of claims 9 to 23, characterized in that, in the case of two cutters (11) fastened parallel to one another in a common cutter bar (10), the cutting edge of the - viewed in working direction - trailing cutter is set in an identical manner to, or slightly deeper than that of the leading cutter.

## Revendications

1. Procédé de rétablissement de la planéité de la surface de chargement de chariot de traitement thermique (trempe) (1) utilisé pour les traitements thermiques, procédé selon lequel, pendant la phase de travail, on descend au moins un couteau (11) sur la surface de charge (2) et on lui fait parcourir toute la surface de chargement,
procédé caractérisé en ce qu'au mouvement de translation du ou des couteau(x) (11), on combine un mouvement de va-et-vient, répété, dirigé transversalement par rapport à la translation.

2. Procédé selon la revendication 1, caractérisé en ce que la vitesse de translation du ou des couteau(x) est comprise entre 100 et 300 mm/sec.

3. Procédé selon l'une des revendications 1 ou 2, caractérisé en ce que la vitesse de translation est de 170 mm/sec.

4. Procédé selon l'une des revendications précédentes, caractérisé en ce que la fréquence du mouvement de va-et-vient combiné au mouvement de translation est comprise entre 1 et 5 Hz.

5. Procédé selon l'une des revendications précédentes, caractérisé en ce que la fréquence du mouvement de va-et-vient est égale à 3 Hz.

6. Procédé selon l'une des revendications précédentes, caractérisé en ce que la fréquence du mouvement de va-et-vient est variée en continu.

7. Procédé selon l'une des revendications précédentes, caractérisé en ce qu'après la phase de travail, le ou les couteau(x) (11) sont relevés par rapport à la surface de chargement (2) pour être reconduits en position de repos.

8. Procédé selon l'une des revendications précédentes, caractérisé en ce que le ou les couteau(x) (11) sont pressés contre la surface de chargement (2) en phase de travail.

9. Dispositif pour la mise en oeuvre du procédé selon l'une des revendications 1 à 8, avec un chariot (7) en forme de porte-couteau et qui se déplace le long de rails (6), enjambant la surface de chargement (2) du chariot de traitement thermique (1), l'alignement des couteaux étant transversal par rapport à la direction du chariot, dispositif caractérisé par un ou plusieurs couteau(x) (11) montés mobiles en alternance sur le chariot (7) et ce chariot (7) comporte un dispositif de manoeuvre (15, 16, 17) transmettant au(x) couteau(x) (11) un mouvement de va-et-vient transversal par rapport à la direction de déplacement du chariot, et combiné au mouvement de translation du chariot.

10. Dispositif selon la revendication 9, caractérisé en ce que le chariot est une traverse (7) enjambant le chariot de traitement thermique (1), dans la direction longitudinale, cette traverse étant montée mobile par un chariot (7a) prévu de part et d'autre sur des rails de guidage (6) dirigés transversalement par rapport au chariot de traitement thermique.

11. Dispositif selon la revendication 9 ou 10, caractérisé en ce que les arêtes du ou des couteau(x) (11) sont alignés dans la direction de l'arête longitudinale du chariot de traitement (1) et leur longueur correspond sensiblement à la longueur de la surface de chargement du chariot de traitement thermique.

12. Dispositif selon l'une des revendications 9 à 11, caractérisé en ce que deux couteaux (11) sont montés parallèlement à une certaine distance choisie et parallèlement à la direction de l'axe longitudinal de la traverse (7).

13. Dispositif selon l'une des revendications 9 à 12, caractérisé en ce que la traverse (7) est entraînée par l'intermédiaire d'un moyen d'entraînement à chaîne (8) qui est actionné par un premier moteur (9) réversible.

14. Dispositif selon l'une des revendications 9 à 13, caractérisé en ce que le dispositif de manoeuvre est un excentrique (16) qui est relié au(x) couteau(x) (11) montés mobiles dans la traverse par l'intermédiaire d'un second moteur (15) solidaire de la traverse (7) et d'un vilebrequin (17) couplé à l'excentrique (16).

15. Dispositif selon l'une des revendications 9 à 14, caractérisé en ce que, pour soulever et abaisser les couteaux (11) sur la surface de chargement de chariot (1) de traitement thermique, la surface de la traverse (7) tournée vers les rails de guidage (6) comporte, à une certaine distance l'un de l'autre, deux rails d'attaque (21) qui s'épaississent sensiblement en forme de coin, en étant montés pour qu'au retour de la traverse (7) dans sa position de repos les rails d'attaque (21) glissent par dessus des galets de roue libre (20) prévus à l'extrémité de tête du rail de guidage (6) et soulèvent la traverse suivant la forme de coin des rails d'attaque (21) et au début de la phase de travail, c'est-à-dire lorsque la traverse passe par dessus le chariot de traitement thermique, ces moyens abaissent la traverse (7) jusqu'à ce que l'arête des couteaux (11) s'appuie sur la surface de chargement.

16. Dispositif selon l'une des revendications 9 à 15, caractérisé en ce que la pression exercée par les couteaux (11) sur la surface de chargement (2), lorsque la traverse est abaissée, se règle par des dispositifs à ressorts (19).

17. Dispositif selon l'une des revendications 9 à 16, caractérisé en ce que les couteaux (11) sont fixés dans une poutre porte-couteaux (10), à des distances, avec leurs arêtes de coupe parallèles à la traverse (7), la poutre porte-couteaux (10) étant elle-même montée mobile alternativement en direction de l'axe longitudinal de la traverse (7).

18. Dispositif selon l'une des revendications 9 à 17, caractérisé en ce que les couteaux (11) sont subdivisés en segments (28a, b) alignés les uns sur les autres.

19. Dispositif selon l'une des revendications 9 à 18, caractérisé en ce que les segments (28a, b) d'un couteau (11) sont portés par des porte-couteaux (29a, b) reliés par des ressorts de pression (30) à la poutre porte-couteaux (10) commune à tous les segments de couteaux (28a, b).

20. Dispositif selon l'une des revendications 9 à 19, caractérisé en ce que les couteaux (11) sont chaque fois subdivisés en segments (28a,b), la longueur de chaque segment (28a, b) correspondant à la largeur de deux profilés (31a, b) de la surface de chargement du chariot de traitement thermique.

21. Dispositif selon l'une des revendications 9 à 20, caractérisé en ce que les arêtes de coupe du ou des couteau(x) font, par rapport à la surface de chargement (2), un angle compris entre 60 et 90° avec la surface de chargement et notamment 80°.

22. Dispositif selon l'une des revendications 9 à 21, caractérisé en ce que l'arête des couteaux (11) est lisse.

23. Dispositif selon l'une des revendications 9 à 21, caractérisé en ce que l'arête des couteaux est en forme de dents de scie.

24. Dispositif selon l'une des revendications 9 à 23, caractérisé en ce que, pour deux couteaux (11) fixés parallèlement à une poutre porte-couteaux (10), commune, l'arête du couteau aval dans la direction de travail est réglée à niveau ou légèrement plus bas que celle du couteau amont.
